**Europäisches Patentamt**

**European Patent Office**

**Office européen des brevets**

(19)

(11) Veröffentlichungsnummer : **0 124 897**
**B1**

(12)

# EUROPÄISCHE PATENTSCHRIFT

(45) Veröffentlichungstag der Patentschrift :
03.01.90

(51) Int. Cl.⁵ : **G 01 P   5/00**

(21) Anmeldenummer : 84105068.5

(22) Anmeldetag : 04.05.84

(54) **Vorrichtung zur Laufzeitbestimmung von Ultraschallimpulsen in einem Fluid.**

(30) Priorität : 06.05.83 DE 3316631

(43) Veröffentlichungstag der Anmeldung :
14.11.84 Patentblatt 84/46

(45) Bekanntmachung des Hinweises auf die Patenterteilung : 03.01.90 Patentblatt 90/01

(84) Benannte Vertragsstaaten :
CH DE FR GB IT LI SE

(56) Entgegenhaltungen :
DE—A— 2 133 393
DE—A— 3 023 457
US—A— 4 257 275
IEEE TRANSACTIONS ON SONICS AND ULTRASO-
NICS, Band SU-30, Nr. 4, Juli 1983, Seiten 264-269,
New York, US; J.S. TORNBERG et al.: "Analysis of
ultrasonic correlation flowmeters for pulp suspension"

(73) Patentinhaber : Erwin Sick GmbH Optik-Elektronik
Sebastian-Kneipp-Strasse 1
D-7808 Waldkirch (DE)

(72) Erfinder : Lauer, Reinhard, Dipl.-Ing.
Unterfelderweg 5
D-7808 Waldkirch (DE)
Erfinder : Hartmann, Werner
Kübelestrasse 11
D-7830 Emmendingen 16 (DE)

(74) Vertreter : Dipl.-Phys.Dr. Manitz Dipl.-Ing. Finsterwald
Dipl.-Ing. Grämkow Dipl.-Chem.Dr. Heyn Dipl.-Phys.
Rotermund Morgan, B.Sc.(Phys)
Seelbergstrasse 23/25
D-7000 Stuttgart 50 (DE)

**Beschreibung**

Die Erfindung betrifft eine Vorrichtung zur Laufzeitbestimmung von Ultraschallimpulsen in einem Fluid, insbesondere Gas, mit wenigstens zwei im Abstand voneinander angeordneten elektroakustischen Wandlern, von denen jeweils einer Ultraschallimpulse über die das Fluid enthaltende Meßstrecke schickt, während der andere die durch die Meßstrecke gelaufenen Impulse empfängt, wobei beide Wandler an eine Korrelationsschaltung angeschlossen sind, um die Laufzeit der Impulse zu ermitteln. Eine derartige Vorrichtung wird bei einem Verfahren zur Messung der Strömungsgeschwindigkeit eines gasförmigen Mediums angewendet. Hierzu werden Ultraschallimpulse in eine das gasförmige Medium enthaltende Meßstrecke in einer solchen Richtung geschickt, daß sie zumindestens eine Komponente mit der Strömungsrichtung des Mediums gemeinsam hat. Durch Messung der Impulslaufzeit für in entgegengesetzten Richtungen durch die Meßstrecke geleitete Ultraschallimpulse kann aus den Laufzeitdifferenzen die Strömungsgeschwindigkeit des Mediums ermittelt werden.

Eine Vorrichtung dieser Art mit den Merkmalen des ersten Teiles von Anspruch 1 ist aus dem Stand der Technik allgemein bekannt.

Bei derartigen Vorrichtungen zur Messung der Strömungsgeschwindigkeit werden in zeitlichen Abständen akustische Impulse durch die in dem strömenden gasförmigen Medium befindliche Meßstrecke geschickt und die Laufzeit der Impulse ausgewertet. Im allgemeinen werden Ultraschallimpulse in entgegengesetzten Richtungen über die Meßstrecke geleitet, und es wird aus der Laufzeitdifferenz die Strömungsgeschwindigkeit ermittelt. Wichtig ist, daß die über die Meßstrecke geschickten Ultraschallimpulse wenigstens eine Komponente in der Richtung der Strömung des gasförmigen Mediums aufweisen. Eine genaue Laufzeiterfassung (DE-OS 30 16 968) wird durch kurzzeitige Störungen auf der Übertragungsstrecke erschwert, die das akustische Signal verformen, sowie durch Langzeitänderungen des Sendersignals.

Ein stochastisches Verfahren (DE-OS 31 10 828), bei dem die Kreuzkorrelation zweier Empfangssignale benutzt wird, die durch Abtastung von im Abstand voneinander liegenden Flächenbereichen gewonnen wird, hat den Nachteil, daß der Zusammenhang zwischen den beiden zu vergleichenden Signalen, insbesondere bei Gasströmungen, außer durch die Gasströmungsgeschwindigkeit auch durch andere physikalische Größen beeinflußt werden kann, z. B. unterschiedliche Änderungen des Übertragungsverhaltens der beiden Meßstrecken.

Die Aufgabe der vorliegenden Erfindung besteht nun darin, eine Vorrichtung der eingangs genannten Gattung, insbesondere unter Verwendung der Kreuzkorrelation auch auf solche Signale anzuwenden, die im störungsfreien Fall vollständig miteinander korreliert sind, nämlich akustische Sende- und Empfangssignale, wobei Langzeitänderungen des Sendesignals, die sonst leicht zu Meßfehlern führen können, keinen nachteiligen Einfluß mehr ausüben, weil das Korrelationsverfahren von der Signalform nicht abhängt.

Zur Lösung dieser Aufgabe sieht die Erfindung vor, daß von dem jeweiligen Sendewandler ein dem erzeugten Schalldruck proportionales elektrisches Signal abgeleitet und an den Eingang der Korrelationsschaltung angelegt ist. Insbesondere soll das Sendesignal für den Sendewandler mittels einer Gabelschaltung im Oszillatorbetrieb erzeugt sein.

Eine vorteilhafte praktische Ausführungsform ist so ausgebildet, daß ein Signalgenerator an den Mittelabgriff der Primärwicklung eines Übertragers angeschlossen ist, deren Enden mit dem Sendewandler bzw. einer der Unterdrückung des Generatorsignals in der Sekundärwicklung dienenden Leitungsnachbildungsschaltung verbunden ist, und daß die Sekundärwicklung an der Korrelationsschaltung anliegt. Zur Selbsterregung des Signalgenerators soll das Ausgangssignal des Übertragers an den Signalgenerator zurückgeführt sein, um diesen mit der Eigenfrequenz des Sendewandlers schwingen zu lassen.

Aufgrund der erfindungsgemäßen Ausbildung wird das den Ultraschall-Sendewandler anregende elektrische Generatorsignal vermittels der Leitungsnachbildungsschaltung vollständig unterdrückt, so daß es am Ausgang des Übertragers nicht erscheint. Die der Membranauslenkung des Sendewandlers entsprechende elektrische Spannung, welche dem erzeugten Drucksignal entspricht, wird jedoch auf die Sekundärwicklung des Übertragers gekoppelt, so daß an dessen Ausgang ein unmittelbar dem Schalldrucksignal proportionales Signal anliegt. Jede Änderung im Verhalten des Sendewandlers wird sich somit in dem an die Korrelationsschaltung gelieferten Signal auswirken und kann dementsprechend bei der Korrelation mit dem Empfangssignal berücksichtigt werden.

Zur Wandlung der akustischen Sende- und Empfangssignale in proportionale elektrische Signale dienen erfindungsgemäß vorzugsweise piezoelektrische Verbundschwinger. Ein geeignetes stochastisches Laufzeitmeßverfahren sieht vor, aus dem Maximum der Kreuzkorrelation von Sende- und Empfangssignal die Laufzeit zu bestimmen. Das Sendesignal wird mit Hilfe der Gabelschaltung im Oszillatorbetrieb so erzeugt, daß in den Empfangskreis der gleichen Gabelschaltung ein elektrisches Signal gekoppelt wird, das dem erzeugten Schalldruck proportional ist.

Durch die erfindungsgemäße Vorrichtung gelingt es, das Verfahren der Kreuzkorrelation auf solche Signale anzuwenden, die im störungsfreien Fall vollständig miteinander korreliert sind, nämlich das akustische Sende- und Empfangssignal. Langzeitänderungen des Sendersignals, die sonst leicht zu Meßfehlern führen können, sind dann unerheblich, weil das Korrelationsverfahren von der Signalform nicht abhängt. Erfindungsgemäß werden die akustischen Signale in ein proportionales elektrisches Sendersignal und in ein proportionales elektrisches Empfangssignal gewandelt.

Die Erfindung wird im folgenden beispielsweise anhand der Zeichnung beschrieben, deren einzige Figur ein Blockschaltbild einer erfindungsgemäßen Vorrichtung zur Laufzeitmessung von Ultraschallimpulsen mittels Kreuzkorrelation schematisch darstellt.

Nach der Zeichnung ist ein elektro-akustischer Ultraschall-Sendewandler 11 am einen Ende einer Meßstrecke 19 angeordnet, die durch ein Gas hindurchführt, indem die Laufzeit von Ultraschallimpulsen zu messen ist. Dem Sendewandler im Abstand gegenüber liegt ein elektro-akustischer Empfangswandler 20. Beide Wandler sind als piezoelektrische Verbundschwinger ausgebildet.

Der Sendewandler 11 wird über das eine Ende der Primärwicklung 17 eines induktiven Übertragers gespeist, dessen anderes Ende an eine Leitungsnachbildungsschaltung 14 angeschlossen ist. Die Primärwicklung 17 weist außerdem einen Mittelabgriff 16 auf, an den der Ausgang eines Impuls-Frequenzsignale abgebenden Signalgenerators 15 angelegt ist. In Abhängigkeit vom Ort des Mittelabgriffs 16 ist die Leitungsnachbildungsschaltung 14 so ausgebildet, daß in der ihr zugeordneten Hälfte der Primärwicklung 17 des Übertragers 13 eine magnetische Erregung erzeugt wird, die der von dem Generatorsignal in der anderen Wicklungshälfte hervorgerufenen magnetischen Erregung entgegengesetzt ist, so daß insoweit in der Sekundärwicklung 18 des Übertragers 13 kein Signal erzeugt wird.

Die Sekundärwicklung 18 ist ebenso wie der Empfänger 20 an eine Korrelationsschaltung 12 angelegt, die weiter unten im einzelnen beschrieben wird. Das Ausgangssignal des Übertragers 13 ist außerdem über eine Rückkopplungsleitung 21 an den Signalgenerator 15 zurückgeführt. Es wird so eine selbsterregte Oszillatorschaltung erzielt, die auf die Frequenz des Sendewandlers 11 automatisch abgestimmt ist. Die Schaltung für die Erzeugung einzelner Ultraschallimpulse ist im Signalgenerator 15 integriert und nicht im einzelnen dargestellt.

Aufgrund der erfindungsgemäßen Gabelschaltung 11, 13, 14 entsteht in der Sekundärwicklung 18 lediglich ein durch die Membranauslenkung des Sendewandlers 11 bedingtes elektrisches Signal, welches dem vom Sendewandler 11 erzeugten Schalldruck proportional ist. Da auch vom Empfangswandler 20 ein dem Schalldruck proportionales Signal an die Korrelationsschaltung 12 abgegeben wird, vergleicht diese in der erforderlichen Weise tatsächlich zwei vollständig miteinander korrelierte Signale, was einer genauen Laufzeitbestimmung zugute kommt.

Der Einfachheit halber ist die Schließung der einzelnen Stromkreise insbesondere im Bereich der Gabelschaltung 11, 13, 14 über Masse nicht im einzelnen dargestellt.

Die Sekundärwicklung 18 des Übertragers 13 ist über einen Verstärker 22 an ein regelbares Verzögerungsglied 23 angelegt, durch welches dem vom Sendewandler 11 kommenden, dem Schalldrucksignal proportionalen Signal eine veränderliche Verzögerung $\tau$ vermittelt werden kann.

Der Ausgang des Verzögerungsgliedes 23 ist über einen Laufzeitmodulator 28 an den einen Eingang einer Multiplikationsschaltung 25 angelegt, derem anderen Eingang über einen Verstärker 24 das Ausgangssignal vom Empfangswandler 20 zugeführt ist. Der Ausgang der Multiplikationsschaltung 25 liegt an einer Laufzeitdetektorschaltung 10 an, welche es gestattet, das in der Multiplikationsschaltung 25 gebildete Produkt zeitlich zu mitteln. Das zeitlich gemittelte Produkt am Ausgang der Laufzeitdetektorschaltung 10 entspricht der Kreuzkorrelationsfunktion und kann z. B. als Gleichspannung abgenommen werden, deren Größe von der Verzögerungszeit $\tau$ abhängt. Die zum Maximum der Kreuzkorrelationsfunktion gehörende Zeit $\tau_0$ ist identisch mit der Signallaufzeit. Durch Veränderung der Verzögerungszeit $\tau$ im Verzögerungsglied 23 kann der Gleichspannungsausgang der Laufzeitdetektorschaltung 10 auf dieses Maximum eingeregelt werden.

Da dem Verstärker 22 ein Signal zugeführt wird, das dem vom Sendewandler 11 erzeugten Ultraschalldruck proportional ist, werden in der erfindungsgemäßen Korrelationsschaltung 12 auch sämtliche beispielsweise durch mechanische Unzulänglichkeiten des piezoelektrischen Verbundschwingers bedingte Verformungen des Schalldrucksignals berücksichtigt, so daß diese die Genauigkeit der Messung der Signallaufzeit $\tau_0$ nicht beeinträchtigen können.

Die erfindungsgemäße Vorrichtung kann auch überall dort angewendet werden, wo es auf eine genaue Bestimmung der Laufzeiten von Ultraschallimpulsen in einem Fluid ankommt. Die Anwendung soll also nicht auf Vorrichtungen zur Messung der Strömungsgeschwindigkeit eines Fluids beschränkt sein, in deren Rahmen auch eine Laufzeitmessung zu erfolgen hat.

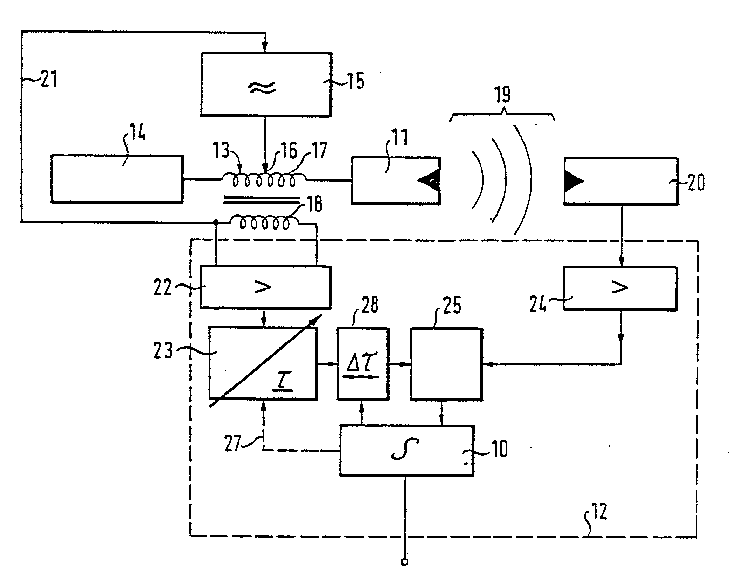

Der Aufbau der Laufzeitdetektorschaltung 10 ergibt sich im einzelnen aus Fig. 2 der gleichzeitig eingereichten Patentanmeldung der Anmelderin mit der Veröffentlichungsnummer EP-A-124 898 und dem Titel « Vorrichtung zur Laufzeitbestimmung von Ultraschallimpulsen in einem Fluid ». Danach befindet sich in der Laufzeitdetektorschaltung 10 eine Integrationsschaltung, deren Integrationszeit von der Meßrate, der Trägerfrequenz der Impulse, der Standardabweichung der Laufzeit und von der geforderten Meßwertgenauigkeit abhängt. Als Faustregel kann man davon ausgehen, daß die Integrationszeit größer oder gleich dem 50-fachen der Zeitdauer eines Meßzyklus ist.

Am Ausgang der Laufzeitdetektorschaltung 10 entsteht eine Gleichkomponente, deren Vorzeichen davon abhängt, ob die Verzögerungszeit $\tau$ kleiner oder größer als die Signallaufzeit ist:

Von dem Ausgang der Laufzeitdetektorschaltung 10 kann eine Steuerleitung 27 zum Verzögerungsglied 23 zurückgeführt sein, um dieses automatisch so einzuregeln, daß das Ausgangssignal der Laufzeitdetektorschaltung 10 zu wird. Die so automatisch eingeregelte Verzögerungszeit $\tau_0$ entspricht dann der Signallaufzeit auf der Meßstrecke 19.

**Patentansprüche**

1. Vorrichtung zur Laufzeitbestimmung von Ultraschallimpulsen in einem Fluid, insbesondere Gas, mit wenigstens zwei im Abstand voneinander angeordneten elektroakustischen Wandlern (11, 20), von denen einer als Sendewandler (11) Ultraschallimpulse über eine das Fluid enthaltende Meßstrecke schickt, während der andere als Empfangswandler (20) die durch die Meßstrecke gelaufenen Impulse empfängt, wobei beide Wandler an eine Korrelationsschaltung (12) angeschlossen sind, um die Laufzeit der Impulse zu ermitteln, dadurch gekennzeichnet, daß von dem Sendewandler (11) ein dem erzeugten Schalldruck proportionales elektrisches Signal ableitbar und an den Eingang der Korrelationsschaltung (12) anlegbar ist.

2. Vorrichtung nach Anspruch 1, dadurch gekennzeichnet, daß das Sendesignal für den Sendewandler (11) mittels einer Gabelschaltung (11, 13, 14) im Oszillatorbetrieb erzeugbar ist.

3. Vorrichtung nach Anspruch 2, dadurch gekennzeichnet, daß ein Signalgenerator (15) an den Mittelabgriff (16) der Primärwicklung (17) eines Übertragers (13) angeschlossen ist, deren Enden mit dem Sendewandler (11) bzw. einer der Unterdrückung des Generatorsignals in der Sekundärwicklung (18) dienenden Leitungsnachbildungsschaltung (14) verbunden ist, und daß die Sekundärwicklung (18) an der Korrelationsschaltung (12) anliegt.

4. Vorrichtung nach Anspruch 3, dadurch gekennzeichnet, daß das Ausgangssignal des Übertrages (13) an den Signalgenerator (15) zurückgeführbar ist, um diesen mit der Eigenfrequenz des Sendewandlers (11) schwingen zu lassen.

**Claims**

1. Apparatus for determining the transit times of ultrasonic pulses in a fluid, in particular in a gas, comprising at least two electroacoustic converters (11, 20) arranged spaced apart from each other of which one as transmitter converter (11) transmits ultrasonic pulses along a measurement path while the other as receiver converter (20) receives the pulses which have travelled along the measurement path, wherein both converters are connected to a correlation circuit (12) in order to determine the transit times of the pulses, characterised in that an electrical signal proportional to the sound pressure which is generated is derivable from the transmitting converter (11) and can be applied to the input of the correlation circuit (12).

2. Apparatus in accordance with claim 1, characterised in that the transmitter signal for the transmitting converter (11) is generatable by means of a hybrid circuit (11, 13, 14) in oscillator operation.

3. Apparatus in accordance with claim 2, characterised in that a signal generator (15) is connected to the central tap (16) of the primary winding (17) of a transformer (13), with the ends of the primary winding being respectively connected to the transmitting converter (11) and to a balancing circuit (14) which serves to suppress the generator signal in the secondary winding (18) ; and in that the secondary winding (18) is connected to the correlation circuit (12).

4. Apparatus in accordance with claim 3, characterised in that the output signal of the transformer (13) can be fed back to the signal generator (15) so that the signal generator (15) oscillates at the natural frequency of oscillation of the transmitting converter (11).

**Revendications**

1. Dispositif en vue de la détermination du temps de propagation d'impulsions ultrasoniques dans un fluide, en particulier dans un gaz, équipé d'au moins deux transducteurs (11, 20) électroacoustiques disposés espacés l'un de l'autre, dont l'un en tant que transducteur émetteur (11) envoie des impulsions ultrasoniques à travers une voie de mesure contenant le fluide, tandis que l'autre en tant que transducteur récepteur (20) qui reçoit les impulsions ayant parcouru la voie de mesure, les deux transducteurs étant reliés à un circuit de corrélation (12) afin de détecter le temps de propagation des impulsions, caractérisé en ce qu'un signal électrique proportionnel à la pression acoustique engendré par le transducteur émetteur (11) peut être prélevé et peut être appliqué à l'entrée du circuit de corrélation (12).

2. Dispositif selon la revendication 1, caractérisé en ce que le signal d'émission pour le transducteur émetteur (11) peut être engendré au moyen d'un circuit en fourche (11, 13, 14) fonctionnant en oscillateur.

3. Dispositif selon la revendication 2, caractérisé en ce qu'un générateur de signaux (15) est relié à la prise médiane (16) de l'enroulement primaire (17) d'un transformateur (13), dont les extrémités sont reliées respectivement au transducteur émetteur (11) et à un circuit de simulation de ligne (14) servant à la suppression du signal du générateur dans l'enroulement secondaire (18), et en ce que l'enroulement secondaire (18) est relié au circuit de corrélation (12).

4. Dispositif selon la revendication 3, caractérisé en ce que le signal de sortie du transformateur (13) peut être réappliqué au générateur de signaux (15), afin de faire osciller celui-ci à la fréquence propre du transducteur émetteur (11).